(19)

Europäisches
Patentamt
European
Patent Office
Office européen
des brevets

(11)   **EP 3 341 107 B2**

(12)   **NEW EUROPEAN PATENT SPECIFICATION**
After opposition procedure

(45) Date of publication and mention
of the opposition decision:
**18.10.2023   Bulletin 2023/42**

(45) Mention of the grant of the patent:
**30.12.2020   Bulletin 2020/53**

(21) Application number: **16842650.0**

(22) Date of filing: **25.08.2016**

(51) International Patent Classification (IPC):
*B01J 20/28* (2006.01)          *B01D 15/00* (2006.01)
*B01J 20/10* (2006.01)          *B01J 20/14* (2006.01)
*B01J 20/32* (2006.01)          *B01D 39/06* (2006.01)

(52) Cooperative Patent Classification (CPC):
**B01J 20/14; B01D 15/00; B01D 39/06; B01J 20/10;
B01J 20/103; B01J 20/28016; B01J 20/28057;
B01J 20/28059; B01J 20/28061; B01J 20/28069;
B01J 20/28071; B01J 20/28083; B01J 20/3204;
B01J 20/3214; B01J 20/3236;**          (Cont.)

(86) International application number:
**PCT/US2016/048723**

(87) International publication number:
**WO 2017/040210 (09.03.2017 Gazette 2017/10)**

(54) **HIGH PERMEABILITY COMPOSITE MAGNESIUM SILICATE FILTER AIDS**

HOCHDURCHLÄSSIGE ZUSAMMENGESETZTE MAGNESIUMSILIKATFILTERHILFEN

ADJUVANTS DE FILTRATION DE SILICATE DE MAGNÉSIUM COMPOSITES À HAUTE
PERMÉABILITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **28.08.2015   US 201562211514 P**

(43) Date of publication of application:
**04.07.2018   Bulletin 2018/27**

(73) Proprietor: **Imerys Filtration Minerals, Inc.**
**San Jose, CA 95112 (US)**

(72) Inventors:
• **FLEMING, Robert**
**San Jose, CA 95119 (US)**
• **HU, Li-Chih**
**Sacramento, CA 95834 (US)**
• **DIAS, Nathan**
**San Jose, CA 95148 (US)**
• **BHIMARAJA, Udaya**
**Pleasanton, CA 94566 (US)**
• **LAMOTTA, Giorgio**
**San Jose, CA 95008 (US)**

(74) Representative: **Haseltine Lake Kempner LLP**
**One Portwall Square**
**Portwall Lane**
**Bristol BS1 6BH (GB)**

(56) References cited:
EP-A2- 0 355 521          WO-A1-2012/023952
WO-A1-2015/100050          WO-A2-2005/037969
CN-A- 103 933 938          US-A- 2 967 149
US-A- 4 112 129          US-A- 4 764 384
US-A- 5 597 600          US-A1- 2007 151 146
US-A1- 2007 166 438          US-A1- 2012 172 195
US-A1- 2015 190 778          US-B1- 6 712 974
US-B2- 8 242 050

• AK Scientific Aluminum magnesium state, 2020
• Classification of Silicate Clays ? Soil Science
• Datasheet Montmorrilonite Mineral Data
Publishing 2001.
• T Bryan. Adsorbing it All Biodiesel Magazine
2005. 40-43
• Magnesol Material Safety Data Sheet Regulatory
Data, 13Apr 2010
• I. M Atadashi ? Purification of crude biodiesel
using dry washing and membrane technologies',
Alexandria Engineering Journal 2015. 54,
1265-1272, 11 September 2015
• S Lin et al. "The recovery of used frying oils with
various adsorbents ', Journal of Food Lipids
1998, 5: p.1-16
• Barrett E. et al , The Determination of Pore
Volume and Area Distributions in Porous
Substances I. Computations from Nitrogen
Isotherms, J. Am. Chem. Soc. 1951, 73, 1, 373-380

EP 3 341 107 B2

- **Chemical Book CAS information for magnesium silicate 2008**

(52) Cooperative Patent Classification (CPC): (Cont.)
**B01J 20/3293;** B01D 2239/0407; B01D 2239/0485;
B01D 2239/10; B01D 2239/1216; B01D 2239/1241

**Description**

**FIELD OF THE DESCRIPTION**

This disclosure relates to composite filter aids, methods of making composite filter aids, and methods for using composite filter aids. More particularly, this disclosure relates to composite filter aids that may be used in filtration applications, including filtering non-aqueous liquids, such as polyethers (polyols), biodiesel, and edible oils. The composite filter aids may also be used as adsorbents or adsorbent filter aids.

**BACKGROUND**

Identifying and using economically viable renewable energy has been a policy goal of governments around the world. One source of renewable fuel that has been promoted and developed is biodiesel. Biodiesel is attractive because it has similar properties to petroleum-based diesel fuel. Biodiesel may be a desirable energy alternative to wind-, solar-, and ethanol-derived energy because the energy content to capital requirement ratio is close to a break-even point, depending upon the price of petroleum-derived energy.

Biodiesel is a form of purified alkyl esters of fatty acids generally referred to as fatty acid alkyl esters (FAAEs). Production of these FAAEs is achieved by the transesterification of animal or vegetable fats or oils or the esterification of fatty acids, including free fatty acids (FFAs) found in degraded fat or oil. The process involves reacting triacylglycerol with an alcohol, typically methanol, in the presence of a catalyst (such as sodium or potassium hydroxide or methoxide), resulting in a reaction referred to as "transesterification." Alternatively, fatty acids, including those found in degraded fat or oil containing high levels of FFAs, typically referred to as "yellow grease," "brown grease," or "trap grease," are reacted with an alcohol, typically methanol, in the presence of an acid, resulting in a reaction referred to as "esterification." When using degraded fat or oil as a raw material, esterification is performed prior to transesterification in order to promote conversion of fatty acids into FAAEs. Unreacted methanol from both processes is then removed by flash evaporation so that it can be reused for subsequent esterification and/or transesterification reaction(s).

Biodiesel can also be derived from triacylglycerides (also called "triglycerides"), which may be obtained from both plant sources and animal fat sources, such as, for example, soybean oil, rapeseed oil, palm oil, coconut oil, corn oil, cottonseed oil, mustard oil, used cooking oils, float grease from wastewater treatment plants, animal fats, such as beef tallow and pork lard, soapstock, crude oils, "yellow grease" (i.e., animal or vegetable oils and fats that have been used or generated as a result of the preparation of food by a restaurant or other food establishment that prepares or cooks food for human consumption with a free fatty acid content of less than 15%), and "white grease," which is rendered fat-derived primarily from pork, and/or other animal fats having a maximum free fatty acid content of 4%.

However, simply performing the esterification and/or transesterification of fatty acids is not enough to produce a usable biodiesel fuel. FAAEs contain impurities that can crystallize, foul engines, and cause numerous problems for the user. As a result, regulations have been developed to address the quality assurance needs of the consumer. Strict standards for commercial biodiesel have been developed by the governments of most countries, including the U.S. Government in ASTM International's ASTM D6751 and the European Union by the European Committee for Standardization in EN 14214.

As a result of the above-described transesterification reaction, two products are produced: fatty acid alkyl esters (FAAEs) (typically Fatty Acid Methyl Esters (FAMEs)) and glycerin. The glycerin portion is separated from the FAAE portion, either by centrifugation or gravity settling, and the resulting FAAEs are often referred to as "crude biodiesel." The crude biodiesel portion consists of FAAEs containing impurities that must be removed before it can be commercially marketed as biodiesel. These impurities include, but are not limited to, alcohol, glycerin, soaps, residual catalysts, metals, free fatty acids, sterol glycosides as well as other impurities that reduce the stability of biodiesel. Therefore, at this point in the process, the FAAEs cannot be commercially marketed as biodiesel until the proper specifications (e.g. ASTM D6751, EN 14214, and the like) are achieved.

Alkaline catalysts present to speed the reaction of biodiesel formation; however, also form a soap during the reaction. For example, a sodium soap is formed when a sodium hydroxide catalyst is employed. The soap must be removed from the biodiesel before it can be used as a fuel, because it would leave a residual ash if any soap were present. A "water wash" is typically used to remove the soap. For example, water is sprayed at low velocity on top of the biodiesel because the soaps and excess alcohol and catalyst may become soluble in the water phase. Soap, however, also commonly causes emulsification of the water and methyl ester. When a large amount of soap is present, the water-washing causes emulsion problems, because the fatty acid esters, such as fatty acid methyl esters, will not separate from the water. In addition, water-washing does not eliminate effectively some of the other contaminants, such as sulfur, phosphorus, and any remaining FFAs.

Biodiesel filtration may occur through hydrogel-based filter aids. However, hydrogels may be expensive to produce and may require large amounts of hydrogel per liter of biodiesel when filtering. Hydrogels may also have unacceptably slow filtration rates. In addition, hydrogels may often include 40 to 60% water, and thus, undesirably add water to the biodiesel along with the silica gel. Biodiesel filtration may also occur through the use of bulk silicate absorbents such as magnesium silicate. However, both bulk magnesium silicate and hydrogels often exhibit problems when used alone as a filter aid, and in many cases diatomaceous earth may be mixed in to assist with the filtration. Thus, it may be desirable to provide filter aids that simplify the filtration process, for example, by using an absorbent, which is also an effective filter aid, thus reducing or removing the need to use additional additives. WO 2005/037969 A2 discloses a method of purifying a bio-diesel fuel by contacting said bio-diesel fuel with an adsorbent material comprising magnesium silicate. The mole ratio of MgO to $SiO_2$ may be between 1:3.0 to 1:3.8.

Polyethylene oxide or polypropylene oxides, sometimes referred to as "polyols," are synthesized from a catalyst that usually contains a strong base, such as potassium or sodium. After polymerization of the polyol, the base may need to be filtered from the polyol composition to improve the purity of the polyol.

Thus, it may be desirable to provide a filter aid composition with improved ability to remove soap and other impurities. It may also be desirable to provide a filter aid having adsorption properties with improved filtration rates. It may also be desirable to provide a method of making a filter aid composition and of using a filter aid composition to improve the filtration of FAAEs, such as biodiesel, or oils, such as edible oils. It may also be desirable to provide methods and compositions for improving filtration of polyols.

## SUMMARY

The present invention is defined in and by the appended claims.

According to still another aspect, a filter aid may include a composite diatomite including a diatomite substrate and precipitated magnesium silicate coating having a mole ratio of $SiO_2$:MgO greater than 1.0:1.

A method may be provided for filtering a non-aqueous liquid. The method may include providing a non-aqueous liquid for filtering, admixing a composite filter aid with the non-aqueous liquid as a body feed, and filtering the non-aqueous liquid through a filter structure to separate the composite filter aid from the non-aqueous liquid. The composite filter aid may be according to the invention.

According to another aspect, the composite filter aid may have a mole ratio of Si:Mg greater than or equal to about 4.0:1.

## BRIEF DESCRIPTION OF THE DRAWINGS

FIG. 1 shows an exemplary process flow for filtering fatty acid alkyl esters.
FIG. 2 is a graph showing BJH pore volume for exemplary filter aids.
FIG. 3 is a graph showing NaOH adsorption capacities of an exemplary filter aid relative to magnesium silicate.
FIG. 4 is a graph showing BJH pore volume for an exemplary filter aid.
FIG. 5 is a graph showing KOH adsorption capacities for exemplary filter aids relative to magnesium silicate.

## DESCRIPTION OF EXEMPLARY EMBODIMENTS

According to the invention, a composite filter aid includes a particulate silicate substrate and magnesium silicate precipitated on the silicate substrate. The mole ratio of $SiO_2$:MgO of the precipitated magnesium silicate is greater than about 1.0:1, and wherein the precipitated magnesium silicate has a median pore diameter in a range from 5 to 15 nm.

According to the invention, a method for making a composite filter aid includes providing a silicate substrate and precipitating magnesium silicate onto the silicate substrate to form a composite filter aid. The mole ratio of $SiO_2$:MgO of the precipitated magnesium silicate is greater than about 1.0:1, and wherein the precipitated magnesium silicate has a median pore diameter in a range from 5 to 15 nm.

Providing the non-aqueous liquid may include adding the composite filter aid as a body feed in the non-aqueous liquid.

According to some embodiments, a filter aid may include a composite diatomite including a diatomite substrate and precipitated magnesium silicate coating having a mole ratio of $SiO_2$:MgO greater than 1.0:1.

A method for filtering a non-aqueous liquid may include providing a non-aqueous liquid for filtering, admixing a composite filter aid with the non-aqueous liquid as a body feed, and filtering the non-aqueous liquid through a filter structure to separate the composite filter aid from the non-aqueous liquid. The composite filter aid may be according to the invention.

According to some embodiments, the composite filter aid may have a mole ratio of $SiO_2$:MgO greater than or equal to about 3.0:1. For example, the composite filter aid may have a mole ratio of $SiO_2$:MgO greater than or equal to about 3.5:1, greater than or equal to about 4.0:1 greater than or equal to about 4.5:1, greater than or equal to about 5.0:1, greater than or equal to about 5.5:1, greater than or equal to about 6.0:1, greater than or equal to about 6.5:1, greater than or equal to about 7.0:1, greater than or equal to about 8.0:1, greater than or equal to about 9.0:1, greater than or equal to about 10.0:1, greater than or equal to about 13.0:1, greater than or equal to about 15.0:1, greater than or equal to about 20.0:1, greater than or equal to about 25.0:1, greater than or equal to about 30.0:1, greater than or equal to about 40.0:1, greater than or equal to about 60.0:1, greater than or equal to about 80.0:1, greater than or equal to about 100.0:1, or greater than or equal to about 120.0:1 ($SiO_2$:MgO).

A method may include, prior to filtering the non-aqueous liquid, pre-coating a filter structure with the composite filter aid.

According to some embodiments, the silicate substrate may include biogenic silica. According to some embodiments, the silicate substrate may be chosen from the group consisting of diatomite, perlite, pumice, volcanic ash, calcined kaolin, smectite, mica, talc, shirasu, obsidian, pitchstone, rice hull ash, and combinations thereof. According to some embodiments, the silicate may include diatomite.

According to some embodiments, the precipitated magnesium silicate may be an amorphous silica. In some embodiments, the precipitated magnesium silicate may form a magnesium silicate coating on the silicate substrate.

According to some embodiments, the amount of precipitated magnesium silicate or precipitated magnesium silicate coating may be in a range from about 5% to about 90% by weight of the composite silicate, such as, for example, from about 10% to about 60%, from about 10% to about 30%, from about 20% to about 40%, from about 5% to about 15%, from about 15% to about 25%, from about 25% to about 35%, from about 20% to about 60%, from about 30% to about 50%, from about 25% to about 45%, from about 45% to about 65%, from about 25% to about 35%, from about 35% to about 45%, from about 45% to about 55%, or from about 55% to about 65% by weight of the composite silicate.

According to some embodiments, the composite filter aid may have a median particle size (dso) in a range from about 1 to 300 microns, such as, for example, from 40 to 300 microns, from 40 to 250 microns, from 100 to 250 microns, from 5 to 150 microns, from about 40 to about 140 microns, from about 60 to about 120 microns, from about 30 to about 60 microns, from about 60 to about 90 microns, from about 90 to about 120 microns, from about 120 microns to about 150 microns, from about 1 to about 40 microns, from 10 to 40 microns, from 10 to 30 microns, or from 15 to 25 microns.

According to some embodiments, the composite filter aid may have a $d_{90}$ in a range from about 50 to about 700 microns, such as, for example, from about 300 to about 700 microns, from about 300 to about 500 microns, from about 100 to about 300 microns, from about 200 to about 400 microns, from about 50 to about 300 microns, from about 100 to about 200 microns, from about 200 to about 300 microns, from about 50 to about 100 microns, from 60 to 140 microns, from 70 to 120 microns, or from 80 to 110 microns.

According to some embodiments, the composite filter aid may have a $d_{10}$ in a range from about 1 to about 30 microns, such as, for example, from about 1 to about 10 microns, from about 10 to about 20 microns, from about 20 to about 30 microns, from about 5 to about 15 microns, from about 15 to about 25 microns, from about 20 to about 25 microns, from about 2 to about 20 microns, from about 3 to about 15 microns, from about 4 to about 12 microns, from about 5 to about 10 microns, from about 1 to about 5 microns, or from about 1 to about 3 microns.

According to some embodiments, the composite filter aid may have a permeability in a range from about $4.93 \times 10^{-14}$ m$^2$ to about $4.93 \times 10^{-12}$ m$^2$ (about 50 to about 5000 millidarcies ("md")). For example, the composite filter aid may have a permeability in a range from about $4.93 \times 10^{-14}$ m$^2$ to about $9.87 \times 10^{-13}$ m$^2$ (about 50 to about 1000 md), from about $4.93 \times 10^{-14}$ m$^2$ to about $4.93 \times 10^{-13}$ m$^2$ (about 50 to about 500 md), from about $4.93 \times 10^{-14}$ m$^2$ to about $2.96 \times 10^{-13}$ m$^2$ (about 50 to about 300 md), from about $4.93 \times 10^{-14}$ m$^2$ to about $1.97 \times 10^{-13}$ m$^2$ (about 50 to about 200 md), from about $4.93 \times 10^{-14}$ m$^2$ to about $9.87 \times 10^{-14}$ m$^2$ (about 50 to about 100 md), from about $9.87 \times 10^{-14}$ m$^2$ to about $3.95 \times 10^{-13}$ m$^2$ (about 100 to about 400 md), from about $9.87 \times 10^{-14}$ m$^2$ to about $2.96 \times 10^{-13}$ m$^2$ (about 100 to about 300 md), from about $9.87 \times 10^{-14}$ m$^2$ to about $1.97 \times 10^{-13}$ m$^2$ (about 100 to about 200 md), from about $1.97 \times 10^{-13}$ m$^2$ to about $2.96 \times 10^{-13}$ m$^2$ (about 200 to about 300 md), from about $9.87 \times 10^{-14}$ m$^2$ to about $3.95 \times 10^{-12}$ m$^2$ (about 100 to about 4000 md), from about $9.87 \times 10^{-14}$ m$^2$ to about $2.96 \times 10^{-12}$ m$^2$ (about 100 to about 3000 md), from about $4.93 \times 10^{-14}$ m$^2$ to about $2.96 \times 10^{-12}$ m$^2$ (about 500 to about 3000 md), from about $4.93 \times 10^{-14}$ m$^2$ to about $1.48 \times 10^{-12}$ m$^2$ (about 500 to about 1500 md), from about $1.48 \times 10^{-12}$ m$^2$ to about $2.96 \times 10^{-12}$ m$^2$ (about 1500 to about 3000 md), from about $1.97 \times 10^{-13}$ m$^2$ to about $1.97 \times 10^{-12}$ m$^2$ (about 200 to about 2000 md), from about $1.97 \times 10^{-13}$ m$^2$ to about $9.87 \times 10^{-13}$ m$^2$ (about 200 to about 1000 md), from about $1.97 \times 10^{-13}$ m$^2$ to about $4.93 \times 10^{-13}$ m$^2$ (about 200 to about 500 md), from about $4.93 \times 10^{-14}$ m$^2$ to about $9.87 \times 10^{-13}$ m$^2$ (about 500 to about 1000 md), from about $9.87 \times 10^{-13}$ m$^2$ to about $1.48 \times 10^{-12}$ m$^2$ (about 1000 to about 1500 md), from about $1.48 \times 10^{-12}$ m$^2$ to about $1.97 \times 10^{-12}$ m$^2$ (about 1500 to about 2000 md), from about $1.97 \times 10^{-12}$ m$^2$ to about $2.47 \times 10^{-12}$ m$^2$ (about 2000 to about 2500 md), from about $2.47 \times 10^{-12}$ m$^2$ to about $2.96 \times 10^{-12}$ m$^2$ (about 2500 to about 3000 md), or from about $9.87 \times 10^{-13}$ m$^2$ to about $1.97 \times 10^{-12}$ m$^2$ (about 1000 to about 2000 md).

According to some embodiments, the composite filter aids may have a BET surface area in a range from about 25 m$^2$/g to 440 m$^2$/g. For example, the composite filter aids may have a BET surface area in a range from about 50 m$^2$/g

to about 300 m$^2$/g, from about 50 m$^2$/g to about 200 m$^2$/g, from about 50 m$^2$/g to about 150 m$^2$/g, from about 100 m$^2$/g to about 200 m$^2$/g, or from about 100 m$^2$/g to about 150 m$^2$/g.

According to some embodiments, the composite filter aid may have a Barrett-Joyner-Halenda ("BJH") pore volume (1.7 nm - 300 nm) in a range from about 0.05 cm$^3$/g to about 0.25 cm$^2$/g, such as, for example, from about 0.05 cm$^3$/g to about 0.15 cm$^3$/g, from about 0.10 cm$^3$/g to about 0.20 cm$^3$/g, from about 0.15 cm$^3$/g to about 0.25 cm$^3$/g, from about 0.50 cm$^3$/g to about 0.15 cm$^3$/g, or from about 0.10 cm$^3$/g to about 0.15 cm$^3$/g.

According to some embodiments, the precipitated magnesium silicate may have a pore diameter (4V/A) less than or equal to about 10 nm as measured by nitrogen adsorption testing using, for example, an ASAP$^®$ 2460 Surface Area and Porosimetry Analyzer, available from Micromeritics Instrument Corporation (Norcross, Ga., USA).

According to some embodiments, the silicate substrate may have a median pore size, as measured by mercury porosimetry, in a range from about 1 micron to about 30 microns, such as, for example, in a range from about 1 micron to about 10 microns, from about 10 microns to about 20 microns, from about 20 microns to about 30 microns, from about 5 microns to about 15 microns, from about 15 microns to about 25 microns, from about 1 micron to about 5 microns, from about 5 microns to about 10 microns, from about 10 microns to about 15 microns, from about 15 microns to about 20 microns, from about 20 microns to about 25 microns, from about 2 microns to about 7 microns, from about 7 microns to about 12 microns, from about 12 microns to about 17 microns, or from about 17 microns to about 22 microns.

According to some embodiments, the composite filter aid may have a wet density in a range from about 160.2 kg/m$^3$ to about 640.7 kg/m$^3$ (about 10 lbs/ft$^3$ to about 40 lbs/ft$^3$). For example, the composite filter aid may have a wet density in a range from about 160.2 kg/m$^3$ to about 320.4 kg/m$^3$ (about 10 lbs/ft$^3$ to about 20 lbs/ft$^3$), from about 320.4 kg/m$^3$ to about 480.6 kg/m$^3$ (about 20 lbs/ft$^3$ to about 30 lbs/ft$^3$), from about 240.3 kg/m$^3$ to about 400.5 kg/m$^3$ (about 15 lbs/ft$^3$ to about 25 lbs/ft$^3$), from about 400.5 kg/m$^3$ to about 560.7 kg/m$^3$ (about 25 lbs/ft$^3$ to about 35 lbs/ft$^3$), from about 240.3 kg/m$^3$ to about 320.4 kg/m$^3$ (about 15 lbs/ft$^3$ to about 20 lbs/ft$^3$), from about 320.4 kg/m$^3$ to about 400.5 kg/m$^3$ (about 20 lbs/ft$^3$ to about 25 lbs/ft$^3$), or from about 400.5 kg/m$^3$ to about 480.6 kg/m$^3$ (about 25 lbs/ft$^3$ to about 30 lbs/ft$^3$).

Silicate Substrate

According to some embodiments, the silicate substrate may include one or more silica-based filtration materials, such as, for example, biogenic silica and natural glasses.

The term "biogenic silica," as used herein, refers to silica produced or brought about by living organisms. One example of biogenic silica is diatomite, which is obtained from diatomaceous earth (also known as "DE" or "kieselguhr"). Diatomite is a sediment enriched in biogenic silica in the form of the siliceous frustules (i.e., shells or skeletons) of diatoms. Diatoms are a diverse array of microscopic, single-celled algae of the class *Bacillariophyceae,* which possess an ornate siliceous skeletons or frustules of varied and intricate structure including two valves which, in the living diatom, fit together much like a pill box. Diatomite may form from the remains of water-borne diatoms and, therefore, diatomite deposits may be found close to either current or former bodies of water. Those deposits are generally divided into two categories based on source: freshwater and saltwater. Freshwater diatomite is generally mined from dry lakebeds and may be characterized as having a low crystalline silica content and a high iron content. In contrast, saltwater diatomite is generally extracted from oceanic areas and may be characterized as having a high crystalline silica content and a low iron content. The morphology of the diatom frustules may vary widely among species and serves as the basis for taxonomic classification; at least 2,000 distinct species are known. The surface of each valve is punctuated by a series of openings that include the complex fine structure of the frustule and impart a design that is distinctive to individual species. The size of typical frustules may be in a range from about 0.75 microns to about 1,000 microns. In some embodiments, the size of the frustules may be in a range from about 10 microns to about 150 microns. The frustules in this size range may be sufficiently durable to retain much of their porous and intricate structure virtually intact through long periods of geologic time when preserved in conditions that maintain chemical equilibrium.

Other sources of biogenic silica include plants, animals, and microorganisms, which may provide concentrated sources of silica with unique characteristics. For example, rice hulls contain sufficient silica that they can be commercially ashed for their siliceous residue, a product commonly known as "rice hull ash." Certain sponges are also concentrated sources of silica, the remnants of which may be found in geologic deposits as acicular spicules.

The term "natural glass," as used herein, refers to natural glasses, which may also be referred to as "volcanic glasses," that are formed by the rapid cooling of siliceous magma or lava. Several types of natural glasses are known, including, for example, perlite, pumice, pumicite, obsidian, and pitchstone. Volcanic glasses, such as perlite and pumice, occur in massive deposits and find wide commercial use. Volcanic ash, often referred to as "tuff" when in consolidated form, includes small particles or fragments that may be in glassy form. As used herein, the term "natural glass" encompasses volcanic ash.

Natural glasses may be chemically equivalent to rhyolite. Natural glasses that are chemically equivalent to trachyte, dacite, andesite, latite, and basalt are also known, but may be less common. The term "obsidian" is generally applied to large numbers of natural glasses that are rich in silica. Obsidian glasses may be classified into subcategories according to their silica content, with rhyolitic obsidians (containing typically about 73% $SiO_2$ by weight) being the most common.

Perlite is a hydrated natural glass that may contain, for example, about 72% to about 75% $SiO_2$ by weight, about 12% to about 14% $Al_2O_3$ by weight, about 0.5% to about 2% $Fe_2O_3$ by weight, about 3% to about 5% $Na_2O$ by weight, about 4 to about 5% $K_2O$ by weight, about 0.4% to about 1.5% CaO by weight, and small amounts of other metallic elements. Perlite may be distinguished from other natural glasses by a higher content (such as about 2% to about 5% by weight) of chemically-bonded water, the presence of a vitreous, pearly luster, and characteristic concentric or arcuate onion skin-like (i.e., perlitic) fractures. Perlite products may be prepared by milling and thermal expansion, and may possess unique physical properties such as high porosity, low bulk density, and chemical inertness. "Perlite," as used herein, also includes expanded perlite.

Talc is magnesium silicate mineral, a mineral chlorite (magnesium aluminum silicate), or a mixture of the two. Talc may be optionally associated with other minerals, for example, dolomite and/or magnesite. Talc also includes synthetic talc, also known as talcose. In particular embodiments, the talc may be a macro or microcrystalline talc. The individual platelet size, i.e. the median diameter as measured by the Sedigraph method, of an individual talc platelet (a few thousand elementary sheets) can vary from approximately 1 $\mu$m to over 100 $\mu$m, depending on the conditions of formation of the deposit. The individual platelet size determines the lamellarity of the talc. A highly lamellar talc will have large individual platelets, whereas a microcrystalline talc will have small platelets. Although all talcs may be termed lamellar, their platelet size differs from one deposit to another. Small crystals provide a compact, dense ore, known as "microcrystalline talc." Large crystals come in papery layers, known as "macrocrystalline talc." Known microcrystalline talc deposits are located in Montana (Yellowstone) and in Australia (Three Springs). In a microcrystalline structure, talc elementary particles are composed of small plates compared to macrocrystalline structures, which are composed of larger plates

Pumice is a natural glass characterized by a mesoporous structure (e.g., having pores or vesicles, sometimes having pore sizes up to about 1 mm). The porous nature of pumice gives it a very low apparent density, in many cases allowing it to float on the surface of water. Most commercial pumice contains from about 60% to about 70% $SiO_2$ by weight. Pumice may be processed by milling and classification, and products may be used as lightweight aggregates and also as abrasives, adsorbents, and fillers. Unexpanded pumice and thermally-expanded pumice may also be used as filtration components.

Composite Filter Aids

According to the invention, the filter aid is a composite filter aid. As used herein, the term "composite filter aid" refers to a material having a particulate silicate substrate and precipitated magnesium silicate. The magnesium silicate is precipitated onto the surface of the silicate substrate. The silicate substrate may act as a filtration component while the precipitated magnesium silicate may act as an adsorbent component. The composite filter aid may have different properties from either constituent silicate substrate or precipitated magnesium silicate alone. The precipitated magnesium silicate includes a precipitated magnesium silicate coating on the silicate substrate. For example, the precipitated magnesium silicate may include an amorphous magnesium silicate that is precipitated on the silicate substrate.

In some embodiments, the precipitated magnesium silicate may form an adsorbent coating or layer that has been precipitated in-situ on the surface of the silicate substrate. As a result, while simple mixtures of filtration materials may segregate upon suspension (e.g., in fluid, conveyance, or transport), the composite filter aid may retain both the adsorptive of the precipitated magnesium silicate and the filtration properties of the silicate substrate. The in-situ precipitation of magnesium silicate onto the silicate substrate may also provide advantages, such as increased adsorption and filtration properties, over other forms of composite filter aids, such as thermally sintered or chemically bonded composites. Without wishing to be bound by a particular theory, it is believed that the in-situ precipitation process may produce a filter aid composition having adsorbent components that are more evenly distributed on the substrate and, consequently, may exhibit a larger surface area for adsorption. The larger surface area may allow the composite filter aid to adsorb a greater number of impurities and/or constituents which, in turn, may result in a lower turbidity level for the filtered fluid. Without wishing to be bound by a particular theory, it is believed that a substrate with a large surface area may allow for a reduction in the thickness of an adsorbent coating which may be formed thereon.

To prepare an exemplary composite filter aid, a silicate substrate, such as, for example, diatomite, biogenic silica, or natural glass, can be mixed with water to form a suspension. In some embodiments, the substrate can be the commercially-available filtration component Celite Standard Super Cel®, manufactured by World Minerals, Inc. In some embodiments, the substrate can be a commercially-available filtration component selected from the group including Celite 3Z®, Celite 577®, Celite 289®, Celite 5120, Celite 535®, Celite 545®, Celite Filter-Cel®, and Celite Hyflo Super-Cel®, all manufactured by World Minerals, Inc.

A sodium silicate solution and a magnesium sulfate ($MgSO_4$) solution may be added to the substrate suspension and the combined solution may be stirred or agitated to precipitate the magnesium silicate.

The sodium silicate may include any one of several compounds that includes sodium oxide ($Na_2O$) and silica ($SiO_2$). Such combinations may include, for example, sodium ortho silicate ($Na_4SiO_4$), sodium meta silicate ($Na_2SiO_3$), and sodium disilicate ($Na_2Si_2O_5$). In some embodiments, the sodium silicate is a diatomite-based sodium silicate. Sodium silicate with a $SiO_2/Na_2O$ ratio of about 3.2:1 and a concentration of 20% may be purchased, for example, from World Minerals Inc. Aqueous sodium silicate with a $SiO_2$:$Na_2O$ ratio of about 3:1 and a concentration of 34.6% may be purchased, for example, from PQ Corp. as "N-CLEAR."

The magnesium sulfate may be any magnesium sulfate that reacts with the sodium silicate to precipitate magnesium silicate. According to some embodiments, the magnesium sulfate may be an aqueous magnesium sulfate. The molarity of the aqueous magnesium sulfate may be about 2.38 M, although any molarity may be used. The aqueous magnesium sulfate may be diluted before being combined with the sodium silicate solution to achieve a desired molarity for the precipitation with sodium silicate.

According to some embodiments, the solution of silicate substrate, sodium silicate, and magnesium sulfate may be stirred and pH stabilized during the reaction. For example, the solution may be stirred for about 2 hours. The pH may be, according to some embodiments, stabilized at about 8.8 during the reaction to precipitate magnesium sulfate onto the silicate substrate.

The solids from the slurry may then be collected, for example, by filtration or centrifugation. The collected solids may then be washed with water. The collected solids may then be re-dispersed in water and the conductivity of the resulting slurry may be measured. According to some embodiments, the collection, rinsing, and re-dispersion of the solids may be repeated until the conductivity is less than or equal to 1 mS.

The resulting cake may be washed with water. The washed cake may then be dried until the excess fluid in the cake has evaporated. For example, the cake may be dried at a temperature ranging from about 110°C to about 200°C. The resulting cake includes a silicate filtration component, such as, for example, diatomite, having a precipitated magnesium silicate coating.

The amount of the sodium silicate and magnesium silicate used in the precipitation process may be chosen to control the pore size distribution in the composite filter aid and the molar ratio of magnesium oxide (MgO) to silica ($SiO_2$) in the precipitated magnesium silicate. For example, increasing the percentage of precipitated magnesium silicate may increase the composite filter aid's ability to act as an adsorbent; however, it may also decrease its ability to act as a filter material. Conversely, decreasing the percentage of precipitated magnesium silicate may decrease the composite filter aid's ability to act as an adsorbent, but may increase its ability to act as a filter material.

According to the invention, the mole ratio of $SiO_2$-to-MgO ($SiO_2$:MgO) of the precipitated magnesium silicate is greater than about 1.0:1 ($SiO_2$:MgO), such as, for example, greater than or equal to about 1.5:1, greater than or equal to about 2.0:1, greater than or equal to about 2.5:1, or greater than or equal to about 3.0:1 ($SiO_2$:MgO). For example, the mole ratio of $SiO_2$:MgO of the precipitated magnesium silicate may be in a range from 1.0:1 to about 4.0:1, such as, for example, in a range from about 1.5:1 to about 3.5:1, from about 2.0:1 to about 3.5:1, from about 2.5:1 to about 3.5:1 ($SiO_2$:MgO). According to some embodiments, the mole ratio of $SiO_2$:MgO of the precipitated magnesium silicate may be about 3.0:1 ($SiO_2$:MgO).

According to some embodiments, the mole ratio of $SiO_2$:MgO in the composite filter aid may be greater than or equal to about 3.0:1 ($SiO_2$:MgO). For example, mole ratio of $SiO_2$:MgO in the composite filter aid may be greater than or equal to about 4.0:1, greater than or equal to about 5.0:1, greater than or equal to about 6.0:1, greater than or equal to about 7.0:1, greater than or equal to about 8.0:1, greater than or equal to about 9.0:1, greater than or equal to about 10.0:1, greater than or equal to about 13.0:1, greater than or equal to about 15.0:1, greater than or equal to about 20.0:1, greater than or equal to about 25.0:1, greater than or equal to about 30.0:1, greater than or equal to about 40.0:1, greater than or equal to about 60.0:1, greater than or equal to about 80.0:1, greater than or equal to about 100.0:1, or greater than or equal to about 120.0:1 ($SiO_2$:MgO).

Filter Aid Compositions

The composite filter aid may be used as part of a filter aid composition. For example, according to some embodiments, the composite filter aid may be used as a filter aid for filtering non-aqueous liquids, such as, for example, FAAEs, biodiesel, or edible oils. Non-aqueous liquids may include, for example, liquids comprising less than or equal to about 25% water. In some embodiments, some oils, such as, for example, biodiesel distillation bottoms, may include water in the part per million range (e.g., from 10 ppm to 10,000 ppm), some liquids are water washed and may include a few percent water by weight.

The non-aqueous liquid may be an oil, such as an edible oil, animal oils, animal fats, hydrogenated oils, or combinations thereof. Suitable oils may include palm oil, palm kernel oil, cocoa butter, cocoa butter substitutes, illipe fat, shea fat, canola oil, castor oil, coconut oil, coriander oil, corn oil, cottonseed oil, hazelnut oil, hempseed oil, linseed oil, mango kernel oil, olive oil, peanut oil, rapeseed oil, rice bran oil, safflower oil, soybean oil, and sunflower oil, and mixtures thereof. The oil may have been subjected to one or more refining steps including degumming, bleaching, deodorizing, and/or interesterification, such as, for example, by chemical or enzymatic treatment, prior to being filtered. The oil may be preferably refined. The oil may additionally have undergone other treatment steps such as fractionation, prior to being filtered. The oil may comprise one or more oils derived from palm. Oils derived from palm include palm oil, palm oil stearin, palm oil olein, palm kernel oil, palm kernel stearin and palm kernel olein, and interesterified products thereof. The vegetable oil may comprise palm oil or a fraction thereof. Palm oil fractions include palm oil oleins, palm oil stearins, palm mid-fractions, and interesterified products thereof. The vegetable oil may include refined palm oil or a fraction thereof, such as palm oil olein or palm oil stearin. The non-aqueous liquid may include at least one polyol.

The composite filter aids may reduce the hydroxide content of the non-aqueous liquid. For example, hydroxide ions or molecules containing hydroxide ions may be adsorbed onto the magnesium silicate of the composite filter aid. The composite filter aid may adsorb at least about 60% of hydroxide ions from the non-aqueous liquid, such as, for example, at least about 70%, at least about 80%, at least about 85%, at least about 90%, at least about 92%, at least about 95%, at least about 96%, at least about 97%, at least about 98%, or at least about 99% of hydroxide ions from the non-aqueous liquid.

The composite filter aid may have a hydroxide (such as sodium hydroxide (NaOH) or potassium hydroxide (KOH)) adsorption capacity in a range from about 50 mg/g to about 600 mg/g, in milligrams of hydroxide per gram of filter aid. For example, the composite filter aid may have a hydroxide adsorption capacity in a range from about 150 mg/g to about 600 mg/g, from about 180 mg/g to about 600 mg/g, or from about 180 mg/g to about 400 mg/g.

The composite filter aid may reduce the metal content of a non-aqueous liquid, such as, for example, by adsorption and/or filtration of metals or metal ions. Metals that may be adsorbed or filtered include, but are not limited to, sodium, calcium, potassium, iron, magnesium, and phosphorus. In some embodiments, the composite filter aid may reduce the metal content by greater than or equal to about, for example, 90%, 85%, 80%, 75%, 70%, 65%, 60%, 55%, or 50%. For example, as measured according to EN 14538, iron content may be reduced by greater than or equal to about 60%, 65%, 70%, 75%, 80%, 85%, or 90%. Non-iron metal content may be reduced by greater than or equal to about, for example, 50%, 55%, 60%, 65%, 70%, 75%, or 80%. According to some embodiments, the amount of metal reduction may be affected by other parameters, such as, for example, the amount of metal present prior to filtration.

The composite filter aids described herein may also serve as replacement filter aids for diatomaceous earth, silica gel, or hydrogel filter aids. When compared with hydrogel filter aids, the composite filter aids may have acceptable filtration performance but may add less water to the FAAE liquid or biodiesel fluid as compared to a hydrogel. Without wishing to be bound by a particular theory, it is believed that the silicate substrate has a microporous stricture while precipitated magnesium silicate has a nanoporous structure. This combination of microporosity and nanoporosity aids in filtering impurities of various size ranges. For example, the nanoporosity may aid in filtering metal and small molecule impurities, while the microporosity may aid in filtering large molecules such as soaps.

The magnesium silicate may facilitate removal of impurities from biodiesels or edible oils. These impurities may include, but are not limited to, free fatty acids, glycerol, soap molecules, color bodies or dies, metals (such as, for example, potassium), and sterol glucosides. The composite filter aids described herein may also serve as replacement filter aids made of pure, or substantially pure, magnesium silicate. Without wishing to be bound by a particular theory, it is believed that the open porous structure of the silicate substrates, such as diatomite, may increase the surface area for adsorption by the magnesium silicate while retaining acceptable porosity or permeability.

As used herein, "adsorption" is the tendency of molecules from an ambient fluid phase to adhere to the surface of a solid. This is not to be confused with the term "absorption," which results when molecules from an ambient fluid diffuse into a solid, as opposed to adhering to the surface of the solid.

To achieve a desired adsorptive capacity, such as may be specified for commercial use, the composite filter aids may have a relatively large surface area, which may imply a fine porous structure. In certain embodiments, porous filter aids, in their un-reacted powder form, can have surface areas ranging up to several hundred $m^2/g$.

As used herein, "surface area" refers to a BET surface area. "BET surface area," as used herein, refers to the technique for calculating specific surface area of physical absorption molecules according to Brunauer, Emmett, and Teller ("BET") theory. BET surface area can be measured with a Gemini III 2375 Surface Area Analyzer, using nitrogen as the sorbent gas, or ASAP® 2460 Surface Area and Porosimetry Analyzer, available from Micromeritics Instrument Corporation (Norcross, Ga., USA).

Filtration components with different BET surface areas and/or different total pore areas may result in different adsorption capacity and filtration rate. Typically, a filter aid with a lower BET and/or lower total pore area tends to have a lower adsorption capacity and a faster filtration rate. For example, calcined diatomaceous earth filter aids and expanded and milled perlite filter aids may serve as filter aids with higher flow rates, but with minimal adsorption function, because of the low surface area, which is typically less than 10 $m^2/g$. Adsorbent components, such as silica gels, are generally high in BET surface areas or total pore areas, but their filtration rates are generally low, due to a much finer particle size distribution and/or the lack of porosity. The fine particles can block the pores during filtration, and the high surface area may create more drag on the flow, thus causing the filtration rate drop significantly. The composite filter aids described herein may provide both acceptable filtration rates and adsorption and impurity removal properties, as compared to untreated silicates (e.g., diatomaceous earth), silica gels, or pure magnesium silicates alone.

According to some embodiments, the composite filter aids may have a BET surface area in a range from about 25 $m^2/g$ to 440 $m^2/g$. For example, the composite filter aids may have a BET surface area in a range from about 50 $m^2/g$ to about 300 $m^2/g$, from about 50 $m^2/g$ to about 200 $m^2/g$, from about 50 $m^2/g$ to about 150 $m^2/g$, from about 100 $m^2/g$ to about 200 $m^2/g$, or from about 100 $m^2/g$ to about 150 $m^2/g$.

One technique for describing pore size distributions in materials is mercury intrusion porosimetry, which uses mercury intrusion under applied isostatic pressure to measure micron-scale pores, such as those of the silicate substrate. In this method a material is surrounded by liquid mercury in a closed evacuated vessel and the pressure is gradually increased. The vessel is sealed and the pressure is reduced to a very low level before mercury intrusion begins. At low pressures, the mercury will not intrude into the powder sample due to the high surface tension of liquid mercury. As the pressure is increased, the mercury is forced into the sample, but will first intrude into the largest spaces, where the curvature of the mercury surface will be the lowest. As pressure is further increased, the mercury is forced to intrude into tighter spaces of the material. Eventually all the voids will be filled with mercury. Nano-porous structure was measured by nitrogen adsorption using an ASAP® 2460 Surface Area and Porosimetry Analyzer, available from Micromeritics Instrument Corporation (Norcross, Ga., USA). The plot of total void volume vs. pressure can thus be developed. The method can thus provide not only total pore volume, but also distinguish a distribution of pore sizes. Once a distribution of pores has been estimated, it is possible to calculate an estimation of surface area based on the pore sizes, and by assuming a pore shape (a spherical shape may be commonly assumed). Median pore size estimates can also be calculated based on volume or area. Median pore size (volume) is the pore size at $50^{th}$ percentile at the cumulative volume graph, while median pore size (area) is the $50^{th}$ percentile at the cumulative area graph. The average pore size (diameter) is four times the ratio of total pore volume to total pore area (4V/A)

According to some embodiments, the silicate substrate, e.g., diatomite, may have a median pore diameter (4V/A) in a range from about 0.1 to about 30 microns, such as, for example, in a range from about 1 to about 10 microns, from about 10 to about 20 microns, from about 20 to about 30 microns, from about 5 to about 15 microns, from about 15 to about 25 microns, from about 0.5 to about 5 microns, from about 1 to about 5 microns, from about 5 to about 10 microns, from about 10 to about 15 microns, from about 15 to about 20 microns, from about 20 to about 25 microns, from about 25 to about 30 microns, from about 0.1 to about 5 microns, from about 2 to about 7 microns, from about 7 to about 12 microns, from about 12 to about 17 microns, from about 17 to about 22 microns, or from about 22 to about 27 microns.

According to some embodiments, the silicate substrate may have a median pore diameter (volume) in a range from about 0.1 to about 10 microns, such as, for example, in a range from about 0.1 to about 5 microns, from about 0.5 to about 3 microns, from about 1 to about 5 microns, about 5 to about 10 microns, from about 2 to about 8 microns, or from about 3 to about 6 microns.

According to some embodiments, the silicate substrate may have a median pore diameter (area) in a range from about 1 to about 50 nm, such as, for example, in a range from about 1 to about 20 nm, from about 1 to about 10 nm, from about 1 to about 5 nm, from about 5 to about 10 nm, or from about 3 to about 8 nm.

According to some embodiments, the precipitated magnesium silicate may have a pore size less than or equal to about 50 nm as measured by nitrogen adsorption using an ASAP® 2460 Surface Area and Porosimetry Analyzer using the BJH technique. For example, the precipitated magnesium silicate may have a pore size less than or equal to about 15 nm, less than or equal to about 10 nm, less than or equal to about 8 nm, less than or equal to about 7 nm, less than or equal to about 6 nm, such as, for example, less than or equal to about 5 nm, or less than or equal to about 4 nm. According to some embodiments, the precipitated magnesium silicate may have a pore size in a range from about 0.1 nm to about 10 nm, such as, for example, in a range from about 0.1 nm to about 5 nm, from about 1 nm to about 5 nm, from about 2 nm to about 7 nm, from about 5 nm to about 10 nm, from about 1 nm to about 3 nm, from about 3 nm to about 5 nm, from about 4 nm to about 6 nm, from about 5 nm to about 7 nm, or from about 7 nm to about 10 nm.

According to some embodiments, the precipitated magnesium silicate may have a BJH pore volume (1.7 nm to 300 nm) in a range from about 0.05 $cm^3/g$ to about 0.2 $cm^3/g$ as measured as described above. For example, the precipitated magnesium silicate may have a BJH pore volume (1.7 nm to 300 nm) in a range from about 0.05 $cm^3/g$ to about 0.15 $cm^3/g$, from about 0.08 $cm^3/g$ to about 0.15 $cm^3/g$, from about 0.10 $cm^3/g$ to about 0.15 $cm^3/g$, or from about 0.10 $cm^3/g$ to about 0.12 $cm^3/g$.

According to some embodiments, the composite filter aids may be processed to provide a wide range of flow rates, which are related to permeability. The composite filter aids disclosed herein may have a permeability suitable for use in filtering non-aqueous liquids, such as, for example FAAEs, biodiesel, and edible oils. Permeability is generally measured in darcy units or darcies ($m^2$). Permeability may be determined using a device designed to form a filter cake on a septum from a suspension of filter aid in water, and then measuring the time required for a specified volume of water to flow through a measured thickness of filter cake of known cross-sectional area. For example, the permeability may be measured through a porous of filter aid material 1 cm high and with a 1 $cm^2$ section through which flows a fluid with a viscosity of 1 mPa•s with a flow rate of 1 $cm^3$/sec under an applied pressure differential of 1 atmosphere. The principles for measuring permeability have been previously derived for porous media from Darcy's law (see, for example, J. Bear, "The Equation of Motion of a Homogeneous Fluid: Derivations of Darcy's Law," in Dynamics of Fluids in Porous Media 161-177 (2nd ed. 1988)).

According to some embodiments, the composite filter aids may have a permeability in a range from 4.93 x $10^{-14}$ $m^2$ to 4.93 x $10^{-12}$ $m^2$ (50 to 5000 md). Permeability measurements were conducted using a dilute aqueous solution of $NaCl + Na_2SO_4 + Na_2CO_3$ having properties that mimic natural water with a fixed viscosity-temperature curve. For example, the composite filter aids may have a permeability in a range from about 4.93 x $10^{-14}$ $m^2$ to about 9.87 x $10^{-13}$ $m^2$ (about 50 to about 1000 md), from about 4.93 x $10^{-14}$ $m^2$ to about 4.93 x $10^{-13}$ $m^2$ (about 50 to about 500 md), from about 4.93 x $10^{-14}$ $m^2$ to about 2.96 x $10^{-13}$ $m^2$ (about 50 to about 300 md), from about 4.93 x $10^{-14}$ $m^2$ to about 1.97 x $10^{-13}$ $m^2$ (about 50 to about 200 md), from about 4.93 x $10^{-14}$ $m^2$ to about 9.87 x $10^{-14}$ $m^2$ (about 50 to about 100 md), from about 9.87 x $10^{-14}$ $m^2$ to about 3.95 x $10^{-13}$ $m^2$ (about 100 to about 400 md), from about 9.87 x $10^{-14}$ $m^2$ to about 2.96 x $10^{-13}$ $m^2$ (about 100 to about 300 md), from about 9.87 x $10^{-14}$ $m^2$ to about 1.97 x $10^{-13}$ $m^2$ (about 100 to about 200 md), from about 1.97 x $10^{-13}$ $m^2$ to about 2.96 x $10^{-13}$ $m^2$ (about 200 to about 300 md), from about 9.87 x $10^{-14}$ $m^2$ to about 2.96 x $10^{-13}$ $m^2$ (about 100 md to about 4000 md), from about 9.87 x $10^{-14}$ $m^2$ to about 2.96 x $10^{-12}$ $m^2$ (about 100 md to about 3000 md), from about 4.93 x $10^{-13}$ $m^2$ to about 2.96 x $10^{-12}$ $m^2$ (about 500 md to about 3000 md), from about 4.93 x $10^{-13}$ $m^2$ to about 1.48 x $10^{-12}$ $m^2$ (about 500 to about 1500 md), from about 1.48 x $10^{-12}$ $m^2$ to about 2.96 x $10^{-12}$ $m^2$ (about 1500 to about 3000 md), from about 1.97 x $10^{-13}$ $m^2$ to about 1.97 x $10^{-12}$ $m^2$ (about 200 md to about 2000 md), from about 1.97 x $10^{-13}$ $m^2$ to about 9.87 x $10^{-13}$ $m^2$ (about 200 md to about 1000 md), from about 1.97 x $10^{-13}$ $m^2$ to about 4.93 $\times$ $10^{-13}$ $m^2$ (about 200 md to about 500 md), from about 4.93 x $10^{-13}$ $m^2$ to about 9.87 x $10^{-13}$ $m^2$ (about 500 md to about 1000 md), from about 9.87 x $10^{-13}$ $m^2$ to about 1.48 x $10^{-12}$ $m^2$ (about 1000 md to about 1500 md), from about 1.48 x $10^{-12}$ $m^2$ to about 1.97 x $10^{-12}$ $m^2$ (about 1500 md to about 2000 md), from about 1.97 x $10^{-12}$ $m^2$ to about 2.47 x $10^{-12}$ $m^2$ (about 2000 md to about 2500 md), from about 2.47 x $10^{-12}$ $m^2$ to about 2.96 x $10^{-12}$ $m^2$ (about 2500 md to about 3000 md), or from about 9.87 x $10^{-13}$ $m^2$ to about 1.97 x $10^{-12}$ $m^2$ (about 1000 md to about 2000 md).

The precipitated magnesium silicate may form a coating on the silicate substrate. According to some embodiments, the amount of precipitated magnesium silicate may be less than or equal to about 80% by weight of the composite filter aid, such as, for example, less than or equal to about 70%, less than or equal to about 60%, less than or equal to about 50%, less than or equal to about 40%, less than or equal to about 30%, less than or equal to about 25%, less than or equal to about 20%, less than or equal to about 15%, or less than or equal to about 5% by weight of the composite filter aid.

The amount of precipitated magnesium silicate may be in a range from about 1% to about 80% by weight of the composite filter aid, such as, for example, from about 5% to about 80%, from about 10% to about 30%, from about 1% to about 10%, from about 10% to about 20%, from about 20% to about 30%, from about 30% to about 40%, from about 5% to about 40%, from about 1% to about 5%, from about 5% to about 15%, from about 15% to about 25%, from about 25% to about 35% by weight of the composite filter aid, or from about 50% to about 80%.

The composite filter aids disclosed herein have a particle size. Particle size may be measured by any appropriate measurement technique now known to the skilled artisan or hereafter discovered. In one exemplary method, particle size and particle size properties, such as particle size distribution ("psd"), are measured using a Leeds and Northrup Microtrac X100 laser particle size analyzer (Leeds and Northrup, North Wales, Pennsylvania, USA). The size of a given particle is expressed in terms of the diameter of a sphere of equivalent diameter that sediments through the suspension, also known as an equivalent spherical diameter or "esd." The median particle size, or dso value, is the value at which 50% by weight of the particles have an esd less than that dso value. The $d_{10}$ value is the value at which 10% by weight of the particles have an esd less than that $d_{10}$ value. The $d_{90}$ value is the value at which 90% by weight of the particles have an esd less than that $d_{90}$ value.

According to some embodiments, the composite filter aids may have a median particle size (dso) in a range from 1 to 300 microns, such as, for example, from 40 to 300 microns, from 40 to 250 microns, from 100 to 250 microns, from 5 to 50 microns, from 5 to 40 microns, from 10 to 40 microns, from 10 to 30 microns, or from 15 to 25 microns.

The composite filter aids have a measurable wet density. "Wet density" is an indicator of a material's porosity. For example, wet density reflects the void volume available to entrap particulate matter in a filtration process and, consequently, wet density may be used to determine filtration efficiency. Wet density also indicates the percent porosity of a material, which may be expressed by the following formula:

$$\text{Porosity} = 100 * [1 - (\text{wet density/true density})]$$

Thus, filtration components with lower wet densities may result in products with greater porosity, and thus perhaps greater filtration efficiency, provided that the true density stays relatively constant. Because wet density reflects the void volume of the adsorbent component to entertain matter in the filtration process, a lower wet density may indicate that the adsorbent component has a high void volume and thus can adsorb more particles and/or constituents in the fluid.

According to one exemplary method, to measure wet density, a material sample of known weight from about 1.00 to about 2.00 g is placed in a calibrated 15 ml centrifuge tube. Deionized water is then added to make up a volume of approximately 10 ml. The mixture is shaken thoroughly until all of the sample is wetted, and no powder remains. Additional deionized water is added around the top of the centrifuge tube to rinse down any mixture adhering to the side of the tube from shaking. The tube is then centrifuged for 5 minutes at 2500 rpm on an IEC Centra® MP-4R centrifuge, equipped with a Model 221 swinging bucket rotor (International Equipment Company; Needham Heights, Massachusetts, USA). Following centrifugation, the tube is carefully removed without disturbing the solids, and the level (i.e., volume) of the settled matter is measured in $cm^3$. The centrifuged wet density of powder can be calculated by dividing the sample weight by the measured volume. According to some embodiments, the composite filter aid may have a wet density in a range from about 160.2 $kg/m^3$ to about 640.7 $kg/m^3$ (about 10 $lbs/ft^3$ to about 40 $lbs/ft^3$). For example, the composite filter aid may have a wet density in a range from about 160.2 $kg/m^3$ to about 320.4 $kg/m^3$ (about 10 $lbs/ft^3$ to about 20 $lbs/ft^3$), from about 320.4 $kg/m^3$ to about 480.6 $kg/m^3$ (about 20 $lbs/ft^3$ to about 30 $lbs/ft^3$), from about 240.3 $kg/m^3$ to about 400.5 $kg/m^3$ (about 15 $lbs/ft^3$ to about 25 $lbs/ft^3$), from about 400.5 $kg/m^3$ to about 560.7 $kg/m^3$ (about 25 $lbs/ft^3$ to about 35 $lbs/ft^3$), from about 240.3 $kg/m^3$ to about 320.4 $kg/m^3$ (about 15 $lbs/ft^3$ to about 20 $lbs/ft^3$), from about 320.4 $kg/m^3$ to about 400.5 $kg/m^3$ (about 20 $lbs/ft^3$ to about 25 $lbs/ft^3$), or from about 400.5 $kg/m^3$ to about 480.6 $kg/m^3$ (about 25 $lbs/ft^3$ to about 30 $lbs/ft^3$).

Exemplary Uses for Composite Filter Aids

The exemplary filter aids, such as the composite filter aids, disclosed herein may be used in any of a variety of processes, applications, and materials, such as, for example, filtering FAAEs, such as biodiesel. Although biodiesel is described as an exemplary liquid, it is understood that other non-aqueous liquids could also be filtered. For example, the filter aids may also be used to filter oils, such as edible oils.

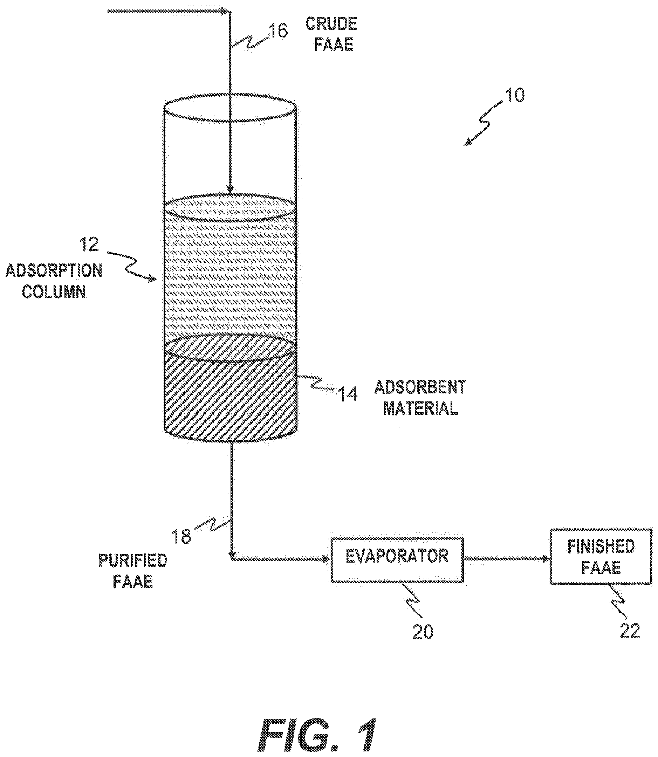

FIG. 1 shows an exemplary process flow for filtering FAAEs. FIG. 1 is a schematic diagram of biodiesel purification by a filtration system. Filtration system 10 includes an adsorption column 12 having an adsorbent material 14. Adsorbent material 14 includes a composite filter aid to purify biodiesel 16. Biodiesel 16 may be a crude or previously filtered biodiesel. Although FIG. 1 shows only a single adsorption column 12, it is understood that two or more adsorbtion columns may be placed in series and/or in parallel to increase the filtration rate of filtration system 10 and/or increase the purification of the filtered biodiesel. Crude biodiesel 16 may include a crude feed of fatty acid alkyl esters (FAAEs) or oils, which is contacted with a sufficient amount of adsorbent material 14 to remove impurities, such as, for example, soaps, phosphorous-containing compounds, catalysts, metals, free glycerin, sterol glycosides, chlorophyll, free fatty acids, and other impurities that reduce the stability of biodiesel. Suitable adsorbent materials 14 include the composite filter aids described herein (e.g., magnesium silicate precipitated onto a silicate substrate, which may further include additional filter aid materials). After passing through adsorbent material 14, the biodiesel is considered filtered biodiesel 18.

Purified biodiesel 18 exits adsorption column 12 and may optionally pass to an evaporator 20. Evaporator 20 may be used to recover alcohol components of purified biodiesel 18, such as methanol. According to some embodiments, evaporator 20 is a flash evaporator. After passing through evaporator 20, the biodiesel may undergo further processing to create a biodiesel product 22.

As biodiesel 16 passes through adsorbent material 14, impurity deposits may accumulate on adsorbent material 14, reducing the flow rate and filtration efficiency of adsorbent material 14. These combined layers of impurity and filter aid are sometimes referred to as a "filter cake." As more and more particles and/or impurities are deposited on the filter cake, the filter cake may become saturated with debris to the point where fluid is no longer able to pass through at an acceptable rate. To help alleviate this problem, additional filter aid material may be introduced by "body feeding." Body feeding is the process of introducing additional filter aid material into the fluid to be filtered before the fluid reaches the filter cake, such as before biodiesel 16 contacts adsorbent material 14. The filter aid material follows the path of the unfiltered fluid and, upon reaching adsorbent material 14, the added filter-aid material will bind to or settle on the filter cake. These additional layers of filter aid material cause the filter cake to swell and thicken and increases the capacity of the cake to entrap additional debris and impurities. Body feeding may also help the filter aid maintain an open structure in the filter cake, which may help to maintain permeability and flow rate of the filter cake.

The exemplary composite filter aids may be used in a variety of filtration processes and compositions. According to some embodiments, a filter element may be used to support the composite filter aid. In some embodiments, the filter element contains filter element voids through which fluid may flow. In some embodiments, the composite filter aid may be applied to a filter septum to protect it and/or to improve clarity of the liquid to be filtered in a filtration process. In some embodiments, the composite filter aid may added directly to the fluid, such as a non-aqueous fluid (e.g., biodiesel or edible oils) to be filtered to increase flow rate and/or extend the filtration cycle. In some embodiments, the composite filter aids may be used as pre-coating layer for a filter element, in body feeding to help improve the usable life of a filter cake and/or to maintain flow properties through the filter, or a combination of both pre-coating and body feeding, in a filtration process.

Embodiments of the composite filter aids may also be used in a variety of filtering methods. In some embodiments, the filtering method includes pre-coating at least one filter element with the composite filter aid, and contacting at least one liquid to be filtered with the at least one coated filter element. In such embodiments, the contacting may include passing the liquid through the filter element. In some embodiments, the filtering method includes suspending the composite filter aid in the liquid to be filtered, and thereafter separating the composite filter aid from the filtered liquid.

Although certain embodiments may be described with reference to the composite filter aids, it is understood that these are exemplary only and that the composite filter aids may additionally be combined with other filter aid materials, such as, for example, diatomaceous earth, natural glasses, silica gels, magnesium silicate particles, or hydrogels.

EXAMPLE 1

An exemplary composite filter aid was prepared. First, 41.4 ml of aqueous sodium silicate solution, commercially available as "N-CLEAR" from PQ Corporation, containing 8.9% $Na_2O$ and 28.7% $SiO_2$, was obtained. Next, 38.0 ml of 2.38 M aqueous $MgSO_4$ solution was diluted with 3.4 ml of water. Then, 80.0 g of diatomaceous earth, commercially available as SUPER-CEL®, manufactured by World Minerals, Inc., was added with 240 ml water to a 1 liter beaker and stirred with an agitator at 350 rpm.

The sodium silicate and $MgSO_4$ solutions were then simultaneously added with agitation to the beaker containing the diatomaceous earth slurry in about 1.5 ml increments. As the slurry thickened, water was added using a wash bottle to break up the slurry. A TEFLON® stirring rod was also used to scrape solid accumulation from the beaker wall. The solutions were allowed to react for 2 hours, with the pH being about 8.8.

After the reaction, the solid component was collected by vacuum filtration. The solid was then rinsed with about 80 ml of water about five times. The rinsed solid was re-dispersed in water having a weight about six times the expected composite silicate weight, and the conductivity was measured. The rinsing and re-dispersion process was repeated until the measured conductivity was less than 1 mS. The solid was then collected by vacuum filtration and dried overnight at 120 °C.

The exemplary composite filter aid prepared by this method contained 80% (w/w) diatomaceous earth and 20% (w/w) magnesium silicate, as determined by x-ray fluorescence (XRF), and the results were normalized to eliminate the effects of moisture and combustible material. The composition of the magnesium silicate was measured by XRF and determined to have a mole ratio of $SiO_2$:MgO of about 3:1.

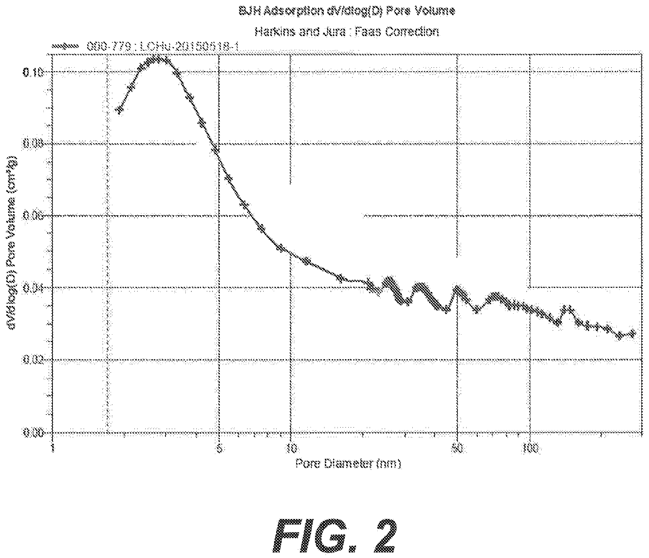

The BJH pore volume was measured for the exemplary composite filter aid, and the distribution of BJH pore diameter is shown in FIG. 2.

The hydroxide adsorption in polyols by the exemplary composite filter aid was measured and compared with pure magnesium silicate, available as MAGNASOL XL from Dallas Group of America, Inc., Liberty Corner, New Jersey, and mixtures of MAGNASOL XL and diatomaceous earth. Hydroxide adsorption in polyols was measured at both high temperature and room temperature. The compositions of each sample is shown below in Table 1.

TABLE 1

| Sample | Magnesium Silicate (%) | Diatomaceous Earth (%) |
|---|---|---|
| Exemplary composite | 20 | 80 |
| MAGNASOL XL | 100 | 0 |
| M-XL20%/DE80%* | 20 | 80 |
| M-XL75%/DE25% | 75 | 25 |
| * "M-XL/DE" denotes a mixture of MAGNASOL XL and diatomaceous earth. | | |

For high temperature evaluation, a polyethylene glycol (PEG)-NaOH solution was prepared by mixing PEG-400 (470 g) and $NaOH_{(aq)}$ (30.0 g, 1.67 M) thoroughly to form a solution. The PEG-NaOH solutions (50.0 mL) having various PEG concentrations were each added to 50 mL Erlenmeyer flasks, as shown in Table 2, with between 0.5% and 3% by weight of each filter aid sample (either exemplary composite, MAGNASOL XL, or M-XL/DE). The flasks were then covered with a watch glass, heated on a hot plate to a temperature of 110 °C, and stirred using a magnetic stirrer for three hours. Each mixture was then cooled to room temperature then centrifuged at 3000 rpm for three minutes. The resulting supernatants (about 5 ml) were diluted with about 30 ml water and titrated using 0.02 M hydrochloric acid using Methyl Red as an indicator. The unadsorbed PEG-NaOH solution (5 ml) in each flask was diluted with about 50 ml water and titrated with 0.02 M hydrochloric acid using Methyl Red as an indicator. The hydroxide concentration for the adsorbed and unadsorbed PRG-NaOH solutions was calculated according to the following formula:

$$[OH^- \; concentration] = \frac{(titrant \; vol.) \times (titrant \; conc.)}{(PEG - NaOH \; titrated \; vol.)}$$

The difference between the OH- concentration adsorbed and unadsorbed PEG-NaOH was then calculated and the hydroxide adsorption capacity was calculated using the following formula:

$$[OH^- adsorption \; capacity] = \frac{(OH^- \; conc. difference) \times (PEG \; total \; vol.)}{(adsorbent \; mass)}$$

The hydroxide adsorption capacity at 110 °C for each of the exemplary filter aid, MAGNESOL XL, and M-XL/DE mixtures at various concentrations of PEG loading is shown below in Table 2

**TABLE 2**

| Sample | BET SA (m²/g) | Sample:PEG (g/50 mL) | NaOH capacity (mg/g) | OH- adsorbed (%) |
|---|---|---|---|---|
| Magnesol XL | 480 | 1.0 | 201 | 97.7 |
| Magnesol XL | 480 | 0.2 | 445 | 43.5 |
| Exemplary Composite | 116 | 2.0 | 102 | 98.8 |
| Exemplary Composite | 116 | 0.36 | 508 | 88.2 |
| Exemplary Composite | 116 | 0.48 | 410 | 96.3 |
| M-XL20%/DE80% | - | 0.48 | 405 | 95.1 |
| M-XL75%/DE25% | - | 0.48 | 370 | 86.8 |

As shown in Table 2, the exemplary composite filter aids have comparable or improved adsorption capacities at high temperature.

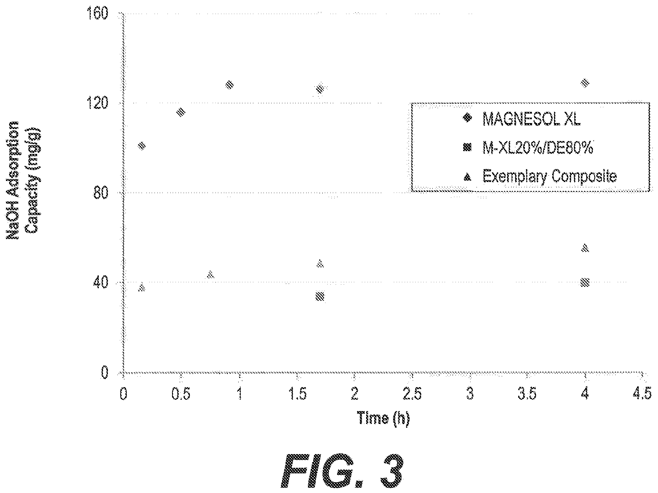

Hydroxide adsorption capacity at room temperature was also measured. Solutions of PEG-NaOH and filter aid compositions were prepared and added to Erlenmeyer flasks as per the high-temperature measurement. The flasks were then covered with a watch glass and stirred for various time periods, shown in FIG. 3, at room temperature using magnetic stirring. A sample of 6.5 ml was extracted from each flask and centrifuged 3000 rpm for 3 minutes. The resulting supernatants (about 5 ml) were diluted with about 30 ml water and titrated using 0.02 M hydrochloric acid using Methyl Red as an indicator. The unadsorbed PEG-NaOH solution (5 ml) was diluted with about 50 ml water and titrated with 0.02 M hydrochloric acid using Methyl Red as an indicator. The hydroxide adsorption capacity was calculated in the same way as the high temperature measurement above. All experiments were carried out with excess NaOH, such that at least 70% of the NaOH remained in solution after four hours of reaction.

FIG. 3 shows the NaOH adsorption capacity for each of the MAGNESOL XL, M-XL20%/DE80%, and exemplary composite for various lengths of reaction times. As shown in FIG. 3, the adsorption capacity of the exemplary composite is greater than the M-XL20%/DE80% filter aid, which has the same proportion of magnesium silicate as the exemplary composite.

EXAMPLE 2

Additional composite filter aid samples were prepared by adding 50 ml MgSO$_4$ solution to a 60 ml syringe and adding 50 ml N-Clear to a 60 ml syringe. Next 210 ml water and 60.14 g diatomaceous earth were added to a 1 l stainless steel beaker and stirred with an agitator at 250 rpm for approximately 5 minutes. The MgSO$_4$ and N-Clear were then added with agitation via a syringe pump at a rate of 24 ml/h. An additional 30 ml water was added at 1.5 hours, 1.75 hours, and 2 hours. After 2 hours, an additional 35 mL N-Clear and MgSO$_4$ was added to each syringe, and the reagent additions were resumed with an additional 30 ml water being added at 2.2 hours, 50 ml water being added at 2.5 hours, and 30 ml water being added at 3 hours. Once 80.5 ml of each of N-Clear and MgSO$_4$ were added to the solution, addition of reagents was stopped, and the solution was allowed to react for 2 hours.

The reaction mixture was separated into thirds by vacuum filtration. Each third of the mixture was then rinsed with about 30 ml water five times. The conductivity of the filter water was measured. The washing and conductivity measurement was repeated until the filter water conductivity was less than 1 mS. The resulting products were then dried at 140 °C overnight.

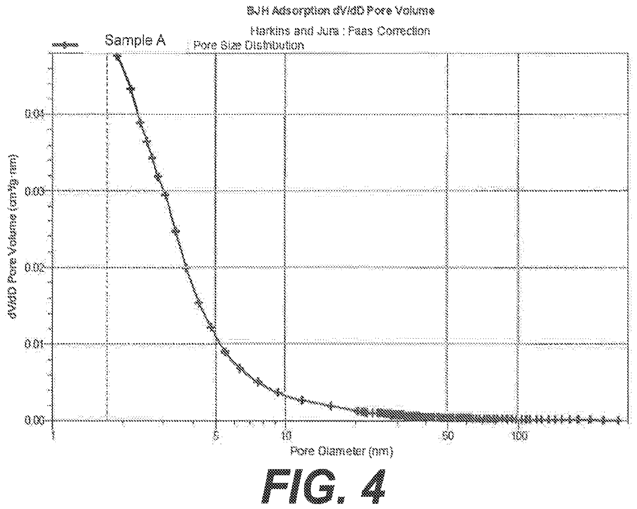

The composition of the samples were then measured by XRF. The BET surface area and permeability were also measured. The composition of each composite filter aid was normalized to eliminate moisture and combustibles. For one sample, the BJH pore size was also measured. The results are shown below in Table 3. FIG. 4 also shows the pore size distribution for Sample A.

TABLE 3

| Sample ID | DE (%) | MgSil (%) | $SiO_2$ in MgSil | MgO in MgSil | BET SA ($m^2$/g) | Permeability ($m^2$) (Darcy) | BJH Davg ($cm^3$/g) | BJH Davg (4V/A, nm) |
|---|---|---|---|---|---|---|---|---|
| Sample A | 62.8 | 37.2 | 29.3 | 8.1 | 216 | $5.2 \times 10^{-13}$ (0.59) | 0.172 | 4.9 |
| Sample B | 68.5 | 31.5 | 24.8 | 6.7 | 165 | $2.61 \times 10^{-12}$ (2.64) | | |
| Sample C | 60.6 | 39.4 | 31.3 | 8.3 | 237 | $1.03 \times 10^{-12}$ (1.04) | | |

Next, the polyol adsorption capacity of Samples B and C was determined using a polyol test mixture with THF:PEG:$H_2O$:KOH = 16:18:5:1 (w/w), with the KOH concentration being about 0.4 M.

To measure the polyol adsorption capacity, the polyol test mixture was made homogeneous with no more than a slight turbidity. 31.0 g (30 ml) of the test mixture was added to a series of 50 mL Erlenmeyer flasks. Adsorbent (Sample B or C or POLYSORB) in an amount of 2.00 g, 3.00 g, 4.00 g, 5.00 g, 6.00 g, or 7.00 g, was added to one of the flasks respectively to create loading amounts of 6.7%, 10.0%, 13.3%, 16.7%, 20.0%, or 23.3% adsorbent, respectively. The Erlenmeyer flasks were then covered and stirred using a magnetic stirrer at 300 rpm for 1 hour. The resulting mixtures were then centrifuged at 3000 rpm for 3 minutes. 5.0 ml of each supernatant was then diluted with about 30 ml water and titrated with 0.100 M HCl using Methyl Red as an indicator. 5 ml of each unadsorbed polyol test mixture was also titrated with 0.100 M HCl using Methyl Red as an indicator. The hydroxide adsorption capacity was then calculated.

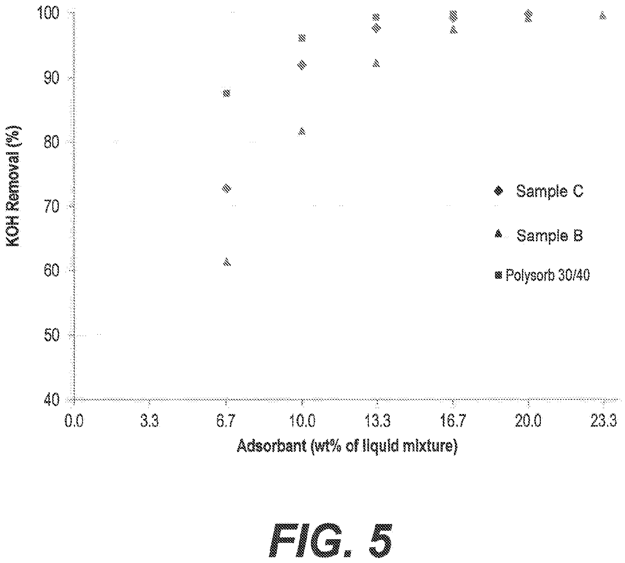

The polyol test mixture was then filtered through Samples B and C at varying loading compositions of composite filter aid. The results were standardized against MAGNESOL® POLYSORB 30/40® magnesium silicate, commercially available from The Dallas Group of America. The results of the filtration are shown in FIG. 5. As shown in FIG. 5, for Sample B at 20% and 23% loading, it was found that 99.2% and 99.6% of the hydroxide was removed, respectively. For Sample C, it was found that at 17% and 20% loading, 99.2% and 99.7% of the hydroxide was removed, respectively. For the polyol test mixture, Samples B and C are capable of adsorbing 3.66 and 4.34 meq of KOH per gram of bulk adsorbent, respectively at room temperature.

EXAMPLE 3

A water-washed crude biodiesel sample was used for this study. To 100 mL of the biodiesel, 0.5 g of the adsorbent was added. The mixture was heated to 180 °F under vacuum and stirring, and kept at 180 °F for 15-20 min. The mixture was then vacuum-filtered and analyzed for soaps and acid value using standard methods defined by American Oil Chemists' Society.

Trisyl 600 is a commercially available material by Grace.

Sorbsyl R92 is a commercially available material by PQ.

Magnesol 600R and D-Sol D60 are commercially available materials by Dallas Group.

60%DE-40%MgSil is the Inventive material.

Celite 512 (blank) is commercially available from Imerys

TABLE 4

| | Soaps (ppm) | Acid Value (mgKOH/g) |
|---|---|---|
| Test Method | AOCS Cc17-79 | AOCS Cd 3a-63 |
| Untreated | 1065.4 | 0.61 |

(continued)

|  | Soaps (ppm) | Acid Value (mgKOH/g) |
|---|---|---|
| Trysyl 600 | 256 | 0.57 |
| Sorbsyl R92 | 106.7 | 0.58 |
| 60%DE-40%MgSil (Invention) | 68.5 | 0.51 |
| Magnesol 600R | 356.1 | 0.54 |
| D-Sol D60 | 68.2 | 0.59 |
| Blank (Celite C512) | 679.8 | 0.60 |

Data indicate that the Inventive material removes soaps and FFA's equal to or better than commercial materials.

**Claims**

1. A composite filter aid comprising:

   a particulate silicate substrate and magnesium silicate precipitated on the particulate silicate substrate, wherein the mole ratio of $SiO_2$:MgO of the precipitated magnesium silicate is greater than 1.0:1, and wherein the precipitated magnesium silicate has a median pore diameter in a range from 5 to 15 nm.

2. The filter aid of claim 1, wherein the silicate substrate comprises biogenic silica.

3. The filter aid of claim 1, wherein the silicate substrate comprises diatomite.

4. The filter aid of claim 1, wherein the precipitated magnesium silicate comprises an amorphous magnesium silicate.

5. The filter aid of claim 1, wherein the precipitated magnesium silicate is in a range from 5% to 80% by weight of the composite filter aid.

6. The filter aid of claim 1, wherein the silicate substrate is chosen from the group consisting of perlite, pumice, volcanic ash, calcined kaolin, smectite, mica, talc, shirasu, obsidian, pitchstone, rice hull ash, and combinations thereof.

7. The filter aid of claim 1, wherein the composite filter aid has a mole ratio of $SiO_2$:MgO greater than or equal to about 4.0:1.

8. The filter aid of claim 1, wherein the composite filter aid has a $d_{50}$ in a range from 40 to 300 microns.

9. The filter aid of claim 1, wherein the composite filter aid has a permeability in a range from $9.87 \times 10^{-14}$ m$^2$ to $2.96 \times 10^{-12}$ m$^2$ (from 100 md to 3000 md).

10. The filter aid of claim 1, wherein the composite filter aid has a BET surface area in a range from 25 m$^2$/g to 440 m$^2$/g.

11. The filter aid of claim 1, wherein the composite filter aid has a BJH pore volume (1.7 nm to 300 nm) in a range from 0.05 cm$^3$/g to 0.25 cm$^3$/g.

12. The filter aid of claim 1, wherein the precipitated magnesium silicate has a median pore volume in a range from 0.1 to 0.5 cm$^3$/g.

13. A method for making a composite filter aid, the method comprising:

    providing a particulate silicate substrate; and
    precipitating magnesium silicate onto the particulate silicate substrate to form a composite filter aid, wherein the mole ratio of $SiO_2$:MgO of the precipitated magnesium silicate is greater than 1.0:1, and wherein the precipitated magnesium silicate has a median pore diameter in a range from 5 to 15 nm.

**14.** The method of claim 13, wherein the silicate substrate comprises biogenic silica.

**Patentansprüche**

**1.** Zusammengesetzte Filterhilfe, umfassend:
ein teilchenförmiges Silikatsubstrat und auf dem teilchenförmigen Silikatsubstrat ausgefälltes Magnesiumsilikat, wobei das Molverhältnis von $SiO_2$:MgO des ausgefällten Magnesiumsilikats größer als 1,0:1 ist und wobei das ausgefällte Magnesiumsilikat einen mittleren Porendurchmesser in einem Bereich von 5 bis 15 nm aufweist.

**2.** Filterhilfe nach Anspruch 1, wobei das Silikatsubstrat biogene Kieselsäure umfasst.

**3.** Filterhilfe nach Anspruch 1, wobei das Silikatsubstrat Diatomit umfasst.

**4.** Filterhilfe nach Anspruch 1, wobei das ausgefällte Magnesiumsilikat ein amorphes Magnesiumsilikat umfasst.

**5.** Filterhilfe nach Anspruch 1, wobei das ausgefällte Magnesiumsilikat in einem Bereich von 5 bis 80 Gew.-% der zusammengesetzten Filterhilfe vorliegt.

**6.** Filterhilfe nach Anspruch 1, wobei das Silikatsubstrat aus der Gruppe bestehend aus Perlit, Bimsstein, Vulkanasche, kalziniertem Kaolin, Smektit, Glimmer, Talk, Shirasu, Obsidian, Pechstein, Reisschalenasche und Kombinationen davon ausgewählt ist.

**7.** Filterhilfe nach Anspruch 1, wobei die zusammengesetzte Filterhilfe ein Molverhältnis von $SiO_2$:MgO von größer oder gleich etwa 4,0:1 aufweist.

**8.** Filterhilfe nach Anspruch 1, wobei die zusammengesetzte Filterhilfe einen $d_{50}$-Wert in einem Bereich von 40 bis 300 Mikrometer aufweist.

**9.** Filterhilfe nach Anspruch 1, wobei die zusammengesetzte Filterhilfe eine Permeabilität in einem Bereich von 9,87 $\times$ 10$^{-14}$ m$^2$ bis 2,96 $\times$ 10$^{-12}$ m$^2$ (von 100 md bis 3000 md) aufweist.

**10.** Filterhilfe nach Anspruch 1, wobei die zusammengesetzte Filterhilfe eine BET-Oberfläche in einem Bereich von 25 m$^2$/g bis 440 m$^2$/g aufweist.

**11.** Filterhilfe nach Anspruch 1, wobei die zusammengesetzte Filterhilfe ein BJH-Porenvolumen (1,7 nm bis 300 nm) in einem Bereich von 0,05 cm$^3$/g bis 0,25 cm$^3$/g aufweist.

**12.** Filterhilfe nach Anspruch 1, wobei das ausgefällte Magnesiumsilikat ein mittleres Porenvolumen in einem Bereich von 0,1 bis 0,5 cm$^3$/g aufweist.

**13.** Verfahren zum Herstellen einer zusammengesetzten Filterhilfe, wobei das Verfahren Folgendes umfasst:

Bereitstellen eines teilchenförmigen Silikatsubstrats; und
Ausfällen von Magnesiumsilikat auf dem teilchenförmigen Silikatsubstrat, um eine zusammengesetzte Filterhilfe zu bilden, wobei das Molverhältnis von $SiO_2$:MgO des ausgefällten Magnesiumsilikats größer als 1,0:1 ist und wobei das ausgefällte Magnesiumsilikat einen mittleren Porendurchmesser in einem Bereich von 5 bis 15 nm aufweist.

**14.** Verfahren nach Anspruch 13, wobei das Silikatsubstrat biogene Kieselsäure umfasst.

**Revendications**

**1.** Adjuvant de filtration composite comprenant :

un substrat de silicate particulaire et du silicate de magnésium précipité sur le substrat de silicate particulaire, dans lequel le rapport molaire $SiO_2$:MgO du silicate de magnésium précipité est supérieur à 1,0:1, et dans lequel le silicate de magnésium précipité a un diamètre médian de pores compris dans une plage allant de 5 à 15 nm.

2. Adjuvant de filtration selon la revendication 1, dans lequel le substrat de silicate comprend de la silice biogénique.

3. Adjuvant de filtration selon la revendication 1, dans lequel le substrat de silicate comprend de la diatomite.

4. Adjuvant de filtration selon la revendication 1, dans lequel le silicate de magnésium précipité comprend un silicate de magnésium amorphe.

5. Adjuvant de filtration selon la revendication 1, dans lequel le silicate de magnésium précipité est compris dans une plage allant de 5 % à 80 % en poids de l'adjuvant de filtration composite.

6. Adjuvant de filtration selon la revendication 1, dans lequel le substrat de silicate est choisi dans le groupe constitué de la perlite, la pierre ponce, la cendre volcanique, le kaolin calciné, la smectite, le mica, le talc, le shirasu, l'obsidienne, la poix, la cendre de coque de riz et leurs combinaisons.

7. Adjuvant de filtration selon la revendication 1, dans lequel l'adjuvant de filtration composite a un rapport molaire $SiO_2$:MgO supérieur ou égal à environ 4,0:1.

8. Adjuvant de filtration selon la revendication 1, dans lequel l'adjuvant de filtration composite a un $d_{50}$ compris dans une plage allant de 40 à 300 microns.

9. Adjuvant de filtration selon la revendication 1, dans lequel l'adjuvant de filtration composite a une perméabilité comprise dans une plage allant de $9,87 \times 10^{-14}$ m$^2$ à $2,96 \times 10^{-12}$ m$^2$ (de 100 md à 3000 md) .

10. Adjuvant de filtration selon la revendication 1, dans lequel l'adjuvant de filtration composite a une surface BET comprise dans une plage allant de 25 m$^2$/g à 440 m$^2$/g.

11. Adjuvant de filtration selon la revendication 1, dans lequel l'adjuvant de filtration composite a un volume de pores BJH (1,7 nm à 300 nm) compris dans une plage allant de 0,05 cm$^3$/g à 0,25 cm$^3$/g.

12. Adjuvant de filtration selon la revendication 1, dans lequel le silicate de magnésium précipité a un volume médian de pores compris dans une plage allant de 0,1 à 0,5 cm$^3$/g.

13. Procédé de fabrication d'un adjuvant de filtration composite, le procédé comprenant :

la fourniture d'un substrat de silicate particulaire ; et
la précipitation du silicate de magnésium sur le substrat de silicate particulaire pour former un adjuvant de filtration composite,
dans lequel le rapport molaire $SiO_2$:MgO du silicate de magnésium précipité est supérieur à 1,0:1, et dans lequel le silicate de magnésium précipité a un diamètre médian de pores compris dans une plage allant de 5 à 15 nm.

14. Procédé selon la revendication 13, dans lequel le substrat de silicate comprend de la silice biogénique.

*FIG. 1*

**FIG. 2**

FIG. 3

FIG. 4

*FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005037969 A2

**Non-patent literature cited in the description**

- The Equation of Motion of a Homogeneous Fluid: Derivations of Darcy's Law. **J. BEAR.** Dynamics of Fluids in Porous Media. 1988, 161-177